# EUROPÄISCHE PATENTSCHRIFT

(11) **EP 1 784 244 B1**
(45) Veröffentlichungstag und Bekanntmachung des Hinweises auf die Patenterteilung: **31.12.2008**
(21) Anmeldenummer: 05754690.5
(22) Anmeldetag: 02.06.2005
(51) Int. Cl.: B01D 25/12

(54) **FILTERVORRICHTUNG UND VERFAHREN ZUM BETREIBEN DER FILTERVORRICHTUNG**
FILTER DEVICE AND METHOD FOR OPERATING SAID FILTER DEVICE
DISPOSITIF DE FILTRAGE ET PROCEDE POUR FAIRE FONCTIONNER CE DISPOSITIF DE FILTRAGE

(30) Priorität: 13.08.2004 DE 102004039275
(43) Veröffentlichungstag der Anmeldung: 16.05.2007
(73) Patentinhaber: E.Begerow Gmbh & Co, 55450 Langenlonsheim (DE)
(72) Erfinder: KLASSON, Reinhold, 55618 Simmertal (DE)
(74) Vertreter: Bartels, Martin Erich Arthur
(86) Internationale Anmeldenummer: PCT/EP2005/005928
(87) Internationale Veröffentlichungsnummer: WO 2006/015637

(56) Entgegenhaltungen:
- EP-A- 0 566 766
- DE-A1- 3 617 519
- DE-A1- 3 906 816
- PATENT ABSTRACTS OF JAPAN Bd. 014, Nr. 582 (C-0792), 26. Dezember 1990 (1990-12-26) & JP 02 253805 A (MAKINO TEKKOSHO:KK; others: 01), 12. Oktober 1990 (1990-10-12)

## Beschreibung

Die Erfindung betrifft eine Filtervorrichtung mit einer vorgebbaren Anzahl an Filter- und Trubrahmen, die in alternierender Reihenfolge hintereinander in Längsrichtung der Vorrichtung verschiebbar angeordnet sind gemäß der Merkmalsausgestaltung des Oberbegriffes des Patentanspruches 1. Die Erfindung betrifft weiter ein Verfahren zum Betreiben einer dahingehenden Vorrichtung.

Durch die DE 198 52 084 A1 ist eine Filtervorrichtung mit einer Mehrzahl von parallel zueinander angeordneten Filterplatten bekannt, zwischen denen sowohl Filtermedien als auch mit Druckluft beaufschlagbare Membranplatten angeordnet sind, wobei zwischen Filtermedium und Membranplatte jeweils ein Unfiltratraum vorgesehen ist, der mit einem gemeinsamen Unfiltratzulauf verbunden ist. Bei der bekannten Lösung ist das Filtermedium eine Filterschicht und die Membranplatten sind jeweils beidseitig ausschließlich mit einer Membran bespannt, die eine glatte Außenoberfläche aufweist und derart aus einem flexiblen Material besteht, dass sie bei Druckbeaufschlagung den benachbarten Unfiltratraum vollständig auskleiden kann.

Da die Membran sich ohne Behinderung durch das Filtertuch in die Filterkammer bzw. Unfiltratkammer ausdehnen kann, kann ein flexibles Material für die Membran verwendet werden, das es erlaubt, bei Druckbeaufschlagung die Filterkammer vollständig auszukleiden, so dass die Membran unmittelbar auf den sich auf der Filterschicht gebildeten Filterkuchen drückt. Auch bietet diese Anordnung von Membranplatten und Filterschichten erhebliche Vorteile bei der Reinigung. Die Membranen können insoweit aufgeblasen werden, dass sich zwischen der Membran und der Filterschicht nur ein geringer Zwischenraum mit entsprechend kleinem Querschnitt einstellt, so dass hohe Strömungsgeschwindigkeiten für die Reinigungsflüssigkeit erzielbar sind. Die für eine optimale Reinigung erforderliche Strömungsgeschwindigkeit von 2m/sec kann mit der bekannten Anordnung problemlos erreicht werden. Eine Abreinigung von Verunreinigungen im Bereich der Einspannstellen von Membranplatten und Filterschichten ist jedoch mit der bekannten Lösung nur möglich, wenn man die dahingehenden Einzelrahmen nach Zerlegen der Vorrichtung und Entfernen der Filterschichten und Membranen einzeln abreinigt, wobei es beim anschließenden Zusammenbau für einen erneuten Filtrierbetrieb zu einem ungewollten Schmutzeintrag kommen kann. Insbesondere bei Anwendungsfällen im pharmazeutischen und biotechnologischen Bereich, wo es auf höchste Reinheitsgrade und Prozess-Sicherheit ankommt, insbesondere bei der Blutplasmafraktionierung, findet die bekannte Lösung dann insoweit ihre Anwendungsgrenzen.

Durch die DE 39 06 816 A1 ist eine Filtervorrichtung als Schichtenfilter bekannt. Der bekannte Schichtenfilter weist eine Mehrzahl von parallel zueinander angeordneten und mit innenliegenden, der Bildung von Zu- und Ablaufkanälen dienenden Augen versehenen Filterplatten auf, die mit dazwischen eingesetzten, entsprechende Augenaussparungen aufweisenden Filterschichten zu einem Filterpaket zusammengefaßt sind, wobei die Filterschichten bei der Pressung des Filterpaketes zwischen äußeren, auch die Augen umgebenden und über den Umfang der Filterplatten unterbrechungslos durchgehenden Rahmenprofilen der Filterplatten zur Abdichtung des Filterpaketes zusammengepreßt sind und wobei das Rahmenprofil jeder Filterplatte an der einen, einer Filterschicht zugekehrten Fläche mindestens eine umfängliche durchgehende, nach außen vorspringende Preßkante aufweist. Mit dem bekannten Schichtenfilter ist gleichfalls eine sichere Festlegemöglichkeit für die jeweilige Filterschicht als Filtermedium erreicht; dennoch ergibt sich auch, wie bei dem vorbeschriebenen Stand der Technik, keine Abreinigungsmöglichkeit für die genannten Klemm- oder Preßspalte, an denen die Filterschichten zwischen den Rahmen festlegbar sind, es sei denn, man nimmt wiederum eine Einzel-Abreinigung der voneinander separierbaren Rahmen vor. Insoweit ist also die bekannte gattungsgemäße Lösung trotz ihrer Vielzahl an Vorteilen für einen Einsatz im Filtrierbetrieb mit demselben Nachteil behaftet, wie die vorstehend beschriebene Lösung.

Durch die EP-A-0 566 766 ist eine gattungsgemäße Filtervorrichtung bekannt mit einer vorgebbaren Anzahl an Filter- und Trubrahmen, die in alternierender Reihenfolge hintereinander in Längsrichtung der Vorrichtung verschiebbar angeordnet sind und die mittels einer Dichteinrichtung gegenseitig abgedichtet sind, wobei die Filterrahmen zumindest auf ihrer dem jeweiligen Trubrahmen zugewandten Seite ein Filtermittel in Form einer Tiefenfilterschicht aufweisen, das randseitig in Klemmspalten zwischen zwei jeweiligen benachbarten Rahmen festlegbar ist, und wobei zwischen der Dichteinrichtung und dem jeweiligen Klemmspalt ein Verbindungsraum angeordnet ist, der in den jeweils zuordenbaren Klemmspalt mündet und der jeweils an mindestens einen zentralen Verbindungskanal angeschlossen ist, der die eingesetzten Rahmen durchgreift, sowie mit mindestens einem Filtrat- und einem Unfiltratkanal. Eine vergleichbare Filtervorrichtung ist auch durch PATENT ABSTRACTS OF JAPAN; Bd. 014, Nr. 582 (C-0792), 26. Dezember 1990 (1990-12-26) & JP 02 253805 A (MAKINO TEKKOS-HO:KK; others: 01), 12.Oktober 1990 (1990-10-12) bekannt.

Bei diesen beiden bekannten Lösungen wird das jeweilige Filtermittel in Form der Tiefenfilterschicht zwischen zwei benachbarten Rahmenteilen in Form eines zuordenbaren Filter- und eines Trubrahmens festgelegt, wobei sich das jeweilige Filtermittel an einer Lochplatte eines Rahmenteils abstützen kann. Das derart eingespannte Filtermittel ist mittels einer Dichteinrichtung gegenüber der Umgebung abgedichtet; läßt aber im übrigen den Filtrat- und den Unfiltratkanal frei und auch die jeweils benötigten zentralen Verbindungskanäle sind eigenständig im Rahmenaufbau der Filtervorrichtung geführt. Hierdurch sind nicht definierte Übergangsstellen gebildet, die eine vollständige Abreinigung und/oder Sterilisierbarkeit der bekannten Filtervorrichtungen erschweren, was sich wiederum nachteilig auf die benötigte Prozeßsicherheit insbesondere im pharmazeutischen und Biotechnologiebereich auswirkt.

Ausgehend von diesem Stand der Technik stellt sich daher die Erfindung die Aufgabe, eine Vorrichtung sowie ein Verfahren zum Betrieb der Vorrichtung zur Verfügung zu stellen, die die Vorteile der bekannten Lösungen mit der Möglichkeit kombiniert, höchste Reinheitsstufen sicherzustellen, um dergestalt insbesondere spezielle Anwendungen für den pharmazeutischen und Biotechnologiebereich zu erschließen. Eine dahingehende Aufgabe löst eine Filtervorrichtung mit den Merkmalen des Patentanspruches 1 in seiner Gesamtheit sowie ein Verfahren zum Betreiben der Vorrichtung gemäß den Merkmalen des Patentanspruches 10.

Dadurch, dass gemäß dem kennzeichnenden Teil des Patentanspruches 1 das Filtermittel am Filterrahmen derart angeordnet ist, dass das Filtermittel den jeweiligen Filtratkanal sowie den jeweiligen Unfiltratkanal umgibt, dass der Verbindungsraum außenumfangsseitig in den zuordenbaren Rahmen verläuft, und dass der jeweilige Filtrat- und Unfiltratkanal eines jeden Rahmens hiervon fluiddicht getrennt in einen Innenkammerbereich münden, der von dem zuordenbaren Verbindungsraum umfaßt ist, ist dergestalt auch die Prozeßsicherheit erhöht, denn es läßt sich genau definiert der Filtrierbetrieb fahren und anschließend definiert der Abreinigungsvorgang, wobei eine vollständige Abreinigung auch im Bereich der Dichteinrichtung möglich ist. Aufgrund der Möglichkeit der vollständigen Abreinigung und/oder Sterilisierbarkeit ist im Hinblick auf die derart erhaltene erhöhte Prozeßsicherheit der Einsatz der erfindungsgemäßen Filtervorrichtung insbesondere im pharmazeutischen und Biotechnologiebereich zweckmäßig.

Die erfindungsgemäße Lösung erlaubt die Möglichkeit, über den jeweiligen Verbindungskanal und den jeweiligen Verbindungsraum die Zu- und/oder Abfuhr von Reinigungsmedien und/oder Spülmedien und/oder Sterilisiermedien zu ermöglichen. Da die genannten Verbindungsräume in die jeweils zuordenbaren Klemmspalte münden, sind diese abreinigbar und sogar sterilisierbar, wenn die verschmutzten Filtermittel nach einem Filtriervorgang aus der Vorrichtung entfernt sind und die Filtervorrichtung ohne die Filtermittel vergleichbar dem Filtrierbetrieb entsprechend dem Abreinigungsbetrieb gefahren wird.

Besonders vorteilhaft ist es dabei, das Verfahren zum Betreiben der Vorrichtung derart durchzuführen, dass während des Filtrierbetriebes die Filtermittel eingesetzt und die Rahmen mittels der Dichteinrichtung dichtend aneinandergelegt sind und dass für einen Reinigungs- und/oder Spül- und/oder Sterilisierbetrieb die Rahmen zunächst auseinandergeschoben, das jeweilige Filtermittel entfernt und dann wieder dichtend zusammengeschoben werden. Dergestalt ist vergleichbar dem Durchführen des Filtrierbetriebes die Komplettabreinigung der Vorrichtung möglich und es muß nicht mehr, wie bei den bekannten Lösungen, jeder Filterrahmen, jeder Trubrahmen und gegebenenfalls jeder Membranplattenrahmen nach Entfernen der Filter- und Membranmedien separat gereinigt werden, so dass insoweit mit der erfindungsgemäßen Lösung sich auch Prozesszeiten einsparen lassen.

Weitere vorteilhafte Ausführungsformen sind Gegenstand der sonstigen Unteransprüche.

Im folgenden wird die erfindungsgemäße Filtervorrichtung anhand eines Ausführungsbeispiels nach der Zeichnung näher erläutert. Dabei zeigen in prinzipieller und nicht maßstäblicher Darstellung die
- **Fig.1**: eine Draufsicht auf einen Filterrahmen;
- **Fig.2**: eine Draufsicht auf einen Trubrahmen;
- **Fig.3**: einen Schnitt längs der Linie A - A in Fig.1;
- **Fig.4**: in vergrößerte Darstellung einen Teilausschnitt des oberen Endes der Anordnung nach der Fig.3.

In den Zeichnungen ist die Filtervorrichtung im wesentlichen nur mit ihren erfindungsgemäß ausgebildeten Bereichen dargestellt. Die allgemein üblichen Bauteile dahingehender Filtervorrichtungen in der Bauart einer horizontalen Filterpresse, wie Gestell, hintere Traverse, die beiden seitlichen horizontalen Tragstangen in Profilform, die mechanische oder hydraulische Anpreßvorrichtung und die an dem vorderen, vorzugsweise ortsfesten Dekkel sowie an dem hinteren, vorzugsweise verschiebbaren Deckel angeschlossenen Rohrleitungen und Armaturen, sind nicht dargestellt, beispielhaft aber in der DE 198 52 084 A1 entsprechend beschrieben.

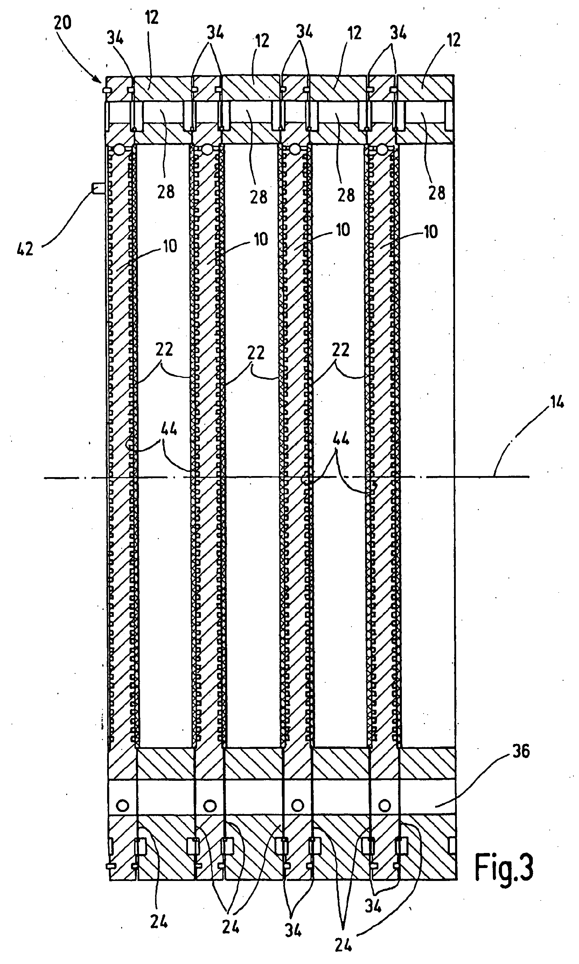

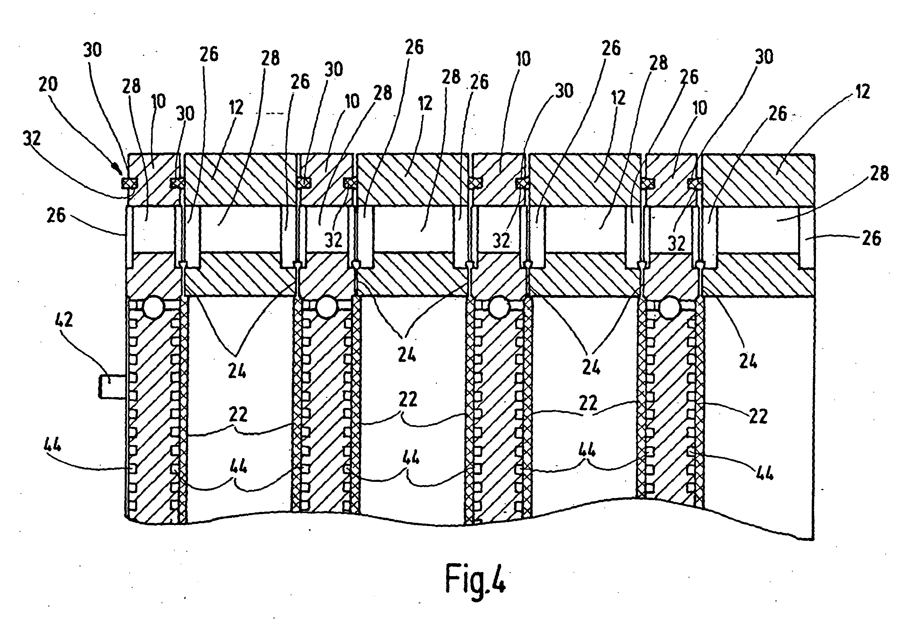

Die erfindungsgemäße Filtervorrichtung ist mit einer vorgebbaren Anzahl an Filterrahmen 10 und Trubrahmen 12 ausgestattet, wobei gemäß der Darstellung nach den Fig.3 und 4 insgesamt vier Filterrahmen 10 dargestellt sind sowie vier Trubrahmen 12, wobei der in Blickrichtung auf die Fig.3 und 4 rechts dargestellte Trubrahmen 12 in der Art eines Abschlußdeckels ausgebildet ist, Die Filterrahmen 10 sowie Trubrahmen 12 sind mithin in alternierender Reihenfolge hintereinander in Längsrichtung 14 der Vorrichtung verschiebbar angeordnet. Die Filterrahmen 10 werden in der Fachsprache auch mit Klarelement bezeichnet und die Trubrahmen 12 als Trub-element. Zum Längsverschieben des jeweiligen Rahmens 10,12 entlang der Längsachse 14 der Vorrichtung dienen zwei einander in der gleichen Höhe gegenüberliegende Profile 16 eines nicht näher dargestellten Gestells, die ein Auflager bilden für die einzelnen Verschiebestücke 18 der Rahmen 10,12.

Sofern die Rahmen 10,12 im Betrieb aneinanderliegen, sind sie über eine als Ganzes mit 20 bezeichnete Dichteinrichtung gegeneinander abgedichtet. Ferner weisen die Filterrahmen 10 auf ihrer dem jeweiligen Trubrahmen 12 zugewandten Seite ein Filtermittel 22, vorzugsweise in Form einer sog. Tiefenfilterschicht, auf, wobei das Filtermittel 22 randseitig in Klemmspalten 24 zwischen zwei jeweiligen benachbarten Rahmen 10,12 festlegbar ist, indem dahingehend das platten- oder flächenförmige Filtermittel 22 randseitig zusammengepreßt wird. Zwischen der Dichteinrichtung 20 und dem jeweiligen Klemmspalt.24 ist ein Verbindungsraum 26 angeordnet, der in den jeweils zuordenbaren Klemmspalt 24 mündet (vgl. Fig.4) und der jeweils an mindestens einen zentralen Verbindungskanal 28 angeschlossen ist, der die eingesetzten Rahmen 10,12 durchgreift.

Wie insbesondere die Fig.4 des weiteren zeigt, ist der jeweilige Verbindungsraum 26 zum einen Teil aus einer umlaufenden Ausnehmung im Trubrahmen 12 gebildet sowie aus einer umlaufenden Ausnehmung im Filterrahmen 10, der gegenüber der Ausnehmung im Trubrahmen 12 volumetrisch kleiner ausgebildet ist. Andere Ausgestaltungen sind hier denkbar, wobei bei der beschriebenen Aussführungsform der Klemmspalt 24 in den zuordenbaren Verbindungsraum 26 derart mündet, dass beidseitig ein entsprechendes Kammervolumen von Filterrahmen 10 und Trubrahmen 12 vorhanden ist. Bei der vorgestellten Ausführungsform ist die Volumenaufteilung etwa 1/3 zu 2/3. Die jeweiligen Verbindungskanäle 28 bilden einen gemeinsamen Versorgungsstrang aus, der parallel zur Längsrichtung 14 der Vorrichtung verläuft. Der jeweilige Verbindungskanal 28 und der jeweilige Verbindungsraum 26 dienen der Zu- und der Abfuhr von Reinigungsmedien und/oder Spülmedien und/oder Sterilisiermedien.

Die als Ganzes mit 20 bezeichnete Dichteinrichtung weist ringförmige Einzeldichtungen 30 auf, die zumindest teilweise und paarweise einander gegenüberliegend in nutenförmigen Ausnehmungen 32 des Filterrahmens aufgenommen sind und die mit einem vorgebbaren Überstand einen Dichtspalt 34 zwischen benachbarten Rahmen 10,12 überbrücken (vgl. Fig.3). Wie sich des weiteren aus den Fig.3 und 4 ergibt, fluchten die zueinander benachbart angeordneten Klemm-24 und Dichtspalten 34 zweier benachbarter Rahmen 10,12 miteinander. Neben den gezeigten Filterrahmen 10 und Trubrahmen 12 können weitere, nicht näher dargestellte Rahmen, wie beispielsweise Membranrahmen, eingesetzt werden, die zumindest teilweise innerhalb der alternierenden Reihenfolge zwischen Filter- 10 und Trubrahmen 12 angeordnet sind (nicht dargestellt). Über dahingehende Membranrahmen und ihre Membränen ließe sich im jeweiligen Trubrahmen 12 aufgenommenes Filtrat (Filterkuchen) auspressen, um dergestalt die Ausbeute bei einem Filtriervorgang zu erhöhen. Dahingehende Ausgestaltungen sind üblich (vgl. beispielsweise DE 198 52 084 A1), so dass an dieser Stelle hierauf nicht mehr näher eingegangen wird.

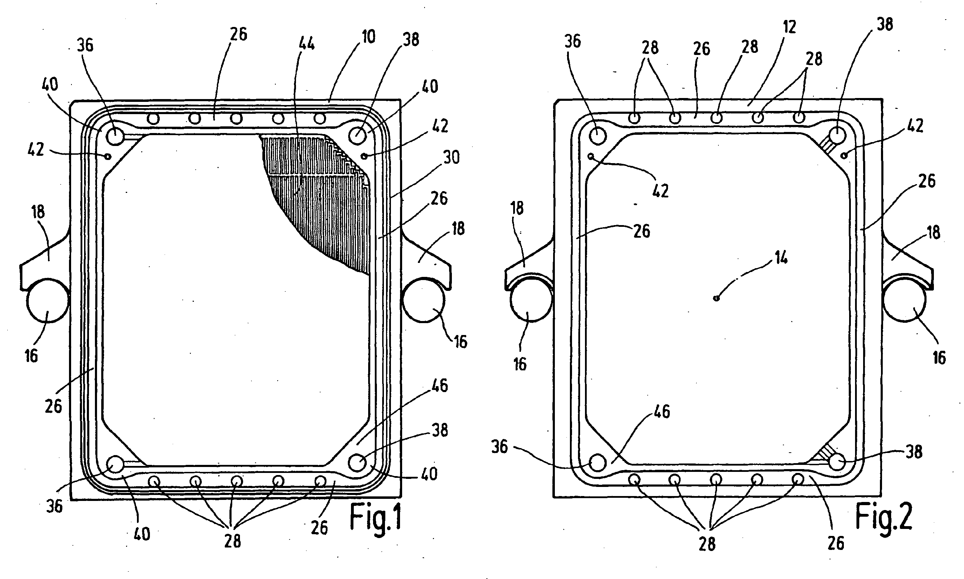

Gemäß den Darstellungen nach den Fig.1 und 2 weisen die jeweiligen Rahmen 10,12 in ihren jeweiligen Ecken Filtratkanäle 36 sowie Unfiltratkanäle 38 auf, die der Abfuhr des Filtrats bzw. der Zufuhr von Unfiltrat dienen. Filtratkanäle 36 und Unfiltratkanäle 38 können gemäß der Darstellung nach den Fig.1 und 2 einander gegenüberliegend entlang den Längsrändern der Rahmen 10,12 in augenartigen Erweiterungen 40 angeordnet sein. Das jeweilige Filtermittel 22, das in der Fig.1 der besseren Darstellung wegen weggelassen wurde, läßt sich über Aufhängebolzen 42 am Filterrahmen 10 festlegen und ist zumindest teilweise in einer Ausnehmung des Filterrahmens 10 aufgenommen, der zur Abstützung des jeweiligen Filtermittels 22 und für die Fluidführung eine Kanalstruktur 44 aufweist. Der dahingehende Aufbau von Filterrahmen 10 sowie Trubrahmen 12 ist im Stand der Technik bekannt (vgl. beispielsweise DE 39 06 816 A1), so dass an dieser Stelle hierauf nicht mehr näher eingegangen wird.

Die Anordnung des Filtermittels 22 am Filterrahmen 10 ist aber jedenfalls derart, dass das Filtermittel 22 in Form einer Tiefenfilterschicht den jeweiligen Filtratkanal 36 sowie den Unfiltratkanal 38 umgeben. Der jeweilige Verbindungskanal 28 hingegen ist frei von dem Filtermittel 22 gehalten. Wie die Darstellung nach den Fig.1 und 2 belegt, sind auf der jeweiligen Oberseite und Unterseite der Rahmen 10,12 in einer Ebene quer zur Längsrichtung 14 der Vorrichtung jeweils fünf Verbindungskanäle 28 vorhanden, die in den gemeinsamen Verbindungsraum 26 eines jeden Rahmens 10,12 münden. Der dahingehende gemeinsame Verbindungsraum 26 verläuft außenumfangsseitig in den Rahmen 10,12, wobei die jeweiligen Filtrat- 36 und Unfiltratkanäle 38 eines jeden Rahmens 10,12 hiervon fluiddicht getrennt in einen Innenkammerbereich 46 münden, der von dem zuordenbaren Verbindungsraum 26 umschlossen ist.

Für das bereits angesprochene Längsverschieben des jeweiligen Rahmens 10,12 sind entlang der Längsachse 14 der Vorrichtung zwei einander gegenüberliegende Profile 16 eines nicht näher dargestellten Gestells vorgesehen, die ein Auflager bilden für die einzelnen Verschiebestücke 18 der Rahmen 10,12. Dergestalt lassen sich die einzelnen Rahmen 10,12 für einen Filtrierbetrieb dichtend aneinanderlegen und für einen Abreinigungsvorgang werden zunächst die Rahmen 10,12 voneinander weg bewegt, das jeweilige verschmutzte oder kontaminierte Filtermittel 22 von den Filterrahmen 10 entfernt und anschließend die Rahmen 10,12 wieder dichtend aneinandergelegt, indem man diese in Längsrichtung 14 der Vorrichtung mit vorgebbaren Anpreßkräften zum Herstellen der Dichtwirkung der Dichteinrichtung 20 aneinanderlegt.

Nun kann in Abhängigkeit der gewünschten Reinigungsaufgabe und in Abhängigkeit des jeweils eingesetzten Mediums eine Zu- oder Abfuhr über die Filtratkanäle 36, über die Unfiltratkanäle 38 und über die Verbindungskanäle 28 erfolgen. Vorzugsweise erfolgt jedoch die Zufuhr des Mediums über die Unfiltratkanäle 38 und die Abfuhr über die Verbindungskanäle 28 sowie den jeweiligen Filtratkanal 36. Da sich die jeweiligen Kanäle über geeignete Ventileinrichtungen (nicht dargestellt) ansteuern lassen, kann insoweit der zeitliche Aufenthalt des Mediums innerhalb der Vorrichtung ebenso vorbestimmt werden wie gewisse Durchlaufrichtungen innerhalb des jeweiligen Rahmens 10,12 der Vorrichtung. Da die Filtermittel 22 im Abreinigungsbetrieb der Vorrichtung nicht mehr die Klemmspalte 24 durchgreifen, sind diese insoweit frei, so dass das jeweilige Medium auch an den Stellen der Klemmspalte 24 wirken kann, ebenso im Bereich der Dichtspalte 34 bis zur Dichteinrichtung 20.

Als Reinigüngs- und Spülmedium können in Abhängigkeit des jeweiligen Einsatzzweckes der Vorrichtung klares Wasser aber auch Laugen und Heißdampf eingesetzt werden, wobei insbesondere bei Einsatz von Heißdampf dieses Medium auch zum Sterilisieren der Gesamtvorrichtung einsetzbar ist. Auch ist es möglich, eine dahingehende Sterilisation durchzuführen, wenn die jeweiligen Filtermittel 22 eingesetzt sind. Mit der erfindungsgemäßen Lösung ist es möglich, prozeßsicher und in kurzer Zeit eine vollständige Abreinigung und Sterilisierung der Filtervorrichtung vorzunehmen, wobei der jeweilige Abreinigungsmodus im zusammengesetzten Zustand der Vorrichtung erfolgt, so dass die Abreinigung vergleichbar dem Filtriervorgang durchführbar ist, was den Vorteil hat, dass man nicht, wie im Stand der Technik aufgezeigt, jedes einzelne Element und Rahmenteil abzureinigen hat.

## Patentansprüche

1. Filtervorrichtung mit einer vorgebbaren Anzahl an Filter(10)- und Trubrahmen (12), die in alternierender Reihenfolge hintereinander in Längsrichtung (14) der Vorrichtung verschiebbar angeordnet sind und die mittels einer Dichteinrichtung (20) gegenseitig abgedichtet sind, wobei die Filterrahmen (10) zumindest auf ihrer dem jeweiligen Trubrahmen (12) zugewandten Seite ein Filtermittel (22) in Form einer Tiefenfilterschicht aufweisen, das randseitig in Klemmspalten (24) zwischen zwei jeweiligen benachbarten Rahmen (10,12) festlegbar ist, und wobei zwischen der Dichteinrichtung (20) und dem jeweiligen Klemmspalt (24) ein Verbindungsraum (26) angeordnet ist, der in den jeweils zuordenbaren Klemmspalt (24) mündet und der jeweils an mindestens einen zentralen Verbindungskanal (28) angeschlossen ist, der die eingesetzten Rahmen (10,12) durchgreift, sowie mit mindestens einem Filtrat(36)- und einem Unfiltratkanal (38), **dadurch gekennzeichnet, dass** das Filtermittel (22) am Filterrahmen (12) derart angeordnet ist, dass das Filtermittel (22) den jeweiligen Filtratkanal (36) sowie den jeweiligen Unfiltratkanal (38) umgibt, dass der Verbindungsraum (26) außenumfangsseitig in den zuordenbaren Rahmen (10,12) verläuft, und dass der jeweilige Filtrat(36)- und Unfiltratkanal (38) eines jeden Rahmens (10,12) hiervon fluiddicht getrennt in einen Innenkammerbereich (46) münden, der von dem zuordenbaren Verbindungsraum (26) umfaßt ist.

2. Filtervorrichtung nach Anspruch 1, **dadurch gekennzeichnet, dass** der jeweilige Verbindungskanal (28) und der jeweilige Verbindungsraum (26) der Zu- und/oder Abfuhr von
- Reinigungsmedien und/oder
- Spülmedien und/oder
- Sterilisiermedien
dienen.

3. Filtervorrichtung nach Anspruch 1 oder 2, **dadurch gekennzeichnet, dass** die Dichteinrichtung (20) ringförmige Einzeldichtungen (30) aufweist, die zumindest teilweise und paarweise einander gegenüberliegend in nutenförmigen Ausnehmungen (32) des Filterrahmens aufgenommen sind und die mit einem vorgebbaren Überstand einen Dichtspalt (34) zwischen benachbarten Rahmen (10,12) überbrücken.

4. Filtervorrichtung nach Anspruch 3, **dadurch gekennzeichnet, dass** die zueinander benachbart angeordneten Klemm-(24) und Dichtspalten (34) zweier benachbarter Rahmen (10,12) miteinander fluchten.

5. Filtervorrichtung nach einem der Ansprüche 1 bis 4, **dadurch gekennzeichnet, dass** neben dem Filter-(10) und Trubrahmen (12) weitere Rahmen, wie Membranrahmen, einsetzbar sind, die zumindest teilweise innerhalb der alternierenden Reihenfolge zwischen Filter-(10) und Trubrahmen (12) angeordnet sind.

6. Filtervorrichtung nach einem der Ansprüche 1 bis 5, **dadurch gekennzeichnet, dass** die Rahmen (10,12) mindestens einen Filtratkanal (36) und einen Unfiltratkanal (38) aufweisen, die voneinander getrennt jeweils in fluchtender Anlage zueinander sind, und dass das Filtermittel (22) vorzugsweise in Form einer Tiefenfilterschicht den jeweiligen Filtrat-(36) und Unfiltratkanal (38) des Filterrahmens (10) umgeben.

7. Filtervorrichtung nach einem der Ansprüche 1 bis 6, **dadurch gekennzeichnet, dass** der jeweilige Verbindungskanal (28) frei von dem Filtermittel (22) die einzelnen Verbindungsräume fluidführend miteinander verbindet.

8. Filtervorrichtung nach einem der Ansprüche 1 bis 7, **dadurch gekennzeichnet, dass** mehrere quer zur Längsrichtung der Vorrichtung angeordnete Verbindungskanäle (28) in den gemeinsamen Verbindungsraum (26) eines jeden Rahmens (10,12) münden.

9. Filtervorrichtung nach einem der Ansprüche 1 bis 8, **dadurch gekennzeichnet, dass** zum Längsverschieben des jeweiligen Rahmens (10,12) entlang der Längsachse (14) der Vorrichtung zwei einander gegenüberliegende Profile (16) eines Gestells dienen, die ein Auflager bilden für einzelne Verschiebestücke (18) der Rahmen (10,12).

10. Verfahren zum Betreiben einer Vorrichtung nach einem der Ansprüche 1 bis 9, **dadurch gekennzeichnet, dass** während des Filtrierbetriebes die Filtermittel (22) eingesetzt und die Rahmen (10,12) mittels der Dichteinrichtung (20) dichtend aneinandergelegt sind und dass für einen Reinigungs- und/oder Spül- und/oder Sterilisierbetrieb die Rahmen (10,12) zunächst auseinandergeschoben, das jeweilige Filtermittel (22) entfernt und dann wieder dichtend zusammengeschoben werden.

## Claims

1. A filter device with a predefinable number of filter frames (10) and sediment frames (12) which are moveably and successively arranged in an alternating sequence in a longitudinal direction (14) of the device, and which are reciprocally sealed by means of a sealing device (20), the filter frames (10) having, at least on their side facing the respective sediment frame (12), a filtering means (22) in the form of a depth filter layer which can be fixed on the edge side in clamping gaps (24) between two respective adjacent frames (10, 12), and between the sealing device (20) and the respective clamping gap (24) a connecting chamber (26) being arranged which opens out into the respectively associated clamping gap (24), and which is respectively connected to at least one central connecting channel (28) which penetrates into the frame (10, 12) being used, and having at least one filtrate (36) channel and one non-filtrate channel (38), **characterised in that** the filtering means (22) is disposed on the filter frame (12) such that the filtering means (22) encompasses the respective filtrate channel (36) and the respective non-filtrate channel (38), that the connecting chamber (26) extends on the outer circumferential side into the associated frame (10, 12), and that the respective filtrate channel (36) and non-filtrate channel (38) of each frame (10, 12), separated from the latter with a fluid seal, open out into an inner chamber region (46) which is encompassed by the associated connecting chamber (26).

2. The filter device according to Claim 1, **characterised in that** the respective connecting channel and the respective connecting chamber (26) are used for the supply and/or discharge of
- cleaning media and/or
- rinsing media and/or
- sterilising media.

3. The filter device according to Claim 1 or 2, **characterised in that** the sealing device (20) has annular individual seals (30) which are accommodated at least partially and opposite one another in pairs in groove-shaped recesses (32) of the filter frame and which bridge a sealing gap (34) between adjacent frames (10, 12) with a predefinable overlap.

4. The filter device according to Claim 3, **characterised in that** the clamping gaps (24) and sealing gaps (34) of two adjacent frames (10, 12) disposed adjacent to one another are flush to one another.

5. The filter device according to any of Claims 1 to 4, **characterised in that** in addition to the filter frame (10) and sediment frame (12) further frames, such as membrane frames can be used which are disposed at least partially within the alternating sequence between the filter frame (10) and the sediment frame (12).

6. The filter device according to any of Claims 1 to 5, **characterised in that** the frames (10, 12) have at least one filtrate channel (36) and one non-filtrate channel (38) which, separated from one another, are respectively arranged flush to one another, and that the filtering means (22), preferably in the form of a depth filter layer, encompass the respective filtrate channel (36) and non-filtrate channel (38) of the filter frame (10).

7. The filter device according to any of Claims 1 to 6, **characterised in that** the respective connecting channel (28), free of the filtering means (22), connects the individual connecting chambers to one another such that fluid can circulate.

8. The filter device according to any of Claims 1 to 7, **characterised in that** a number of connecting channels (28) disposed laterally to the longitudinal direction of the device open out into the common connecting chamber (26) of each frame (10, 12).

9. The filter device according to any of Claims 1 to 8, **characterised in that** in order to move the respective frame (10, 12) longitudinally along the longitudinal axis (14) of the device, two profiles (16) of a framework lying opposite one another and which form a support for individual moving pieces (18) of the frames (10, 12) are used.

10. A method of operating a device according to any of Claims 1 to 9, **characterised in that** during the filtering operation the filtering means (22) are used and the frames (10, 12) are positioned adjacent to one another to form a seal by means of the sealing device (20), and that for a cleaning and/or rinsing and/or sterilising operation the frames (10, 12) are initially pushed apart, the respective filter means (22) is removed, and then they are pushed back together again to form a seal.

## Revendications

1. Dispositif de filtration comprenant un nombre prédéterminé de cadres de filtration (10) et de cadres de dépôts (12), qui sont agencés selon une succession alternée les uns à la suite des autres en pouvant coulisser dans la direction longitudinale (14) du dispositif, et sont rendus étanches les uns par rapport aux autres au moyen d'un système d'étanchéité (20), les cadres de filtration (10) comportant au moins sur leur côté dirigé vers le cadre de dépôts (12) respectif, un moyen de filtration (22) sous la forme d'une couche de filtration à lit profond, qui peut être fixé au niveau des bord dans des interstices de serrage (24) entre deux cadres (10, 12) respectifs voisins, et une chambre de liaison (26) étant disposée entre le système d'étanchéité (20) et l'interstice de serrage (24) respectif, cette chambre de liaison débouchant dans l'interstice de serrage (24) respectif qui peut lui être associé et étant raccordée à au moins un canal de liaison (28) central qui traverse les cadres (10, 12) insérés, le dispositif comprenant en outre au moins un canal de produit filtré (36) et un canal de produit non filtré (38),
**caractérisé en ce que** le moyen de filtration (22) est monté sur le cadre de filtration (10) de manière telle que le moyen de filtration (22) entoure le canal de produit filtré (36) respectif ainsi que le canal de produit non filtré (28) respectif, **en ce que** la chambre de liaison (26) se raccorde en périphérie extérieure au cadre (10, 12) pouvant lui être associé, et **en ce que** le canal de produit filtré (36) et le canal de produit non filtré (38) respectifs de chaque cadre (10, 12) débouchent, en en étant séparés de manière étanche aux fluides, dans une zone de chambre intérieure (46) qui est entourée par la chambre de liaison (26) pouvant lui être associée.

2. Dispositif de filtration selon la revendication 1, **caractérisé en ce que** le canal de liaison (28) respectif et la chambre de liaison (26) respective servent à l'amenée et/ou à l'évacuation
- d'agents de nettoyage et/ou
- d'agents de rinçage, et/ou
- d'agents de stérilisation.

3. Dispositif de filtration selon la revendication 1 ou 2, **caractérisé en ce que** le système d'étanchéité (20) comprend des joints d'étanchéité (30) individuels de forme annulaire, qui sont logés au moins partiellement et de façon mutuellement opposée par paire, dans des évidements (32) en forme de rainure du cadre de filtration, et qui enjambent, par une partie en saillie pouvant être prédéterminée, un interstice d'étanchéité (34) entre des cadres (10, 12) voisins.

4. Dispositif de filtration selon la revendication 3, **caractérisé en ce que** les interstices de serrage (24) et les interstices d'étanchéité (34) disposés de manière voisine les uns aux autres, de deux cadres (10, 12) voisins, sont mutuellement alignés.

5. Dispositif de filtration selon l'une des revendications 1 à 4, **caractérisé en ce qu'**à côté du cadre de filtration (10) et du cadre de dépôts (12) il est possible d'insérer d'autres cadres, tels que des cadres à membrane, qui sont montés au moins en partie à l'intérieur de la succession alternée entre cadres de filtration (10) et cadres de dépôts (12).

6. Dispositif de filtration selon l'une des revendications 1 à 5, **caractérisé en ce que** les cadres (10, 12) présentent au moins un canal de produit filtré (36) et un canal de produit non filtré (38), qui, séparés les uns des autres, sont respectivement en appui réciproque d'alignement, et **en ce que** le moyen de filtration (22), de préférence sous la forme d'une couche de filtration à lit profond, entoure respectivement le canal de produit filtré (36) et le canal de produit non filtré (38) du cadre de filtration (10).

7. Dispositif de filtration selon l'une des revendications 1 à 6, **caractérisé en ce que** le canal de liaison (28) respectif, libre et dégagé du moyen de filtration (22), assure la liaison fluidique des chambres de liaison individuelles les unes avec les autres.

8. Dispositif de filtration selon l'une des revendications 1 à 7, **caractérisé en ce que** plusieurs canaux de liaison (28), montés transversalement à la direction longitudinale du dispositif, débouchent dans la chambre de liaison (26) commune de chacun des cadres (10, 12).

9. Dispositif de filtration selon l'une des revendications 1 à 8, **caractérisé en ce que**, pour le coulissement longitudinal de chaque cadre (10, 12) le long de l'axe longitudinal (14) du dispositif, on utilise deux profilés (16) mutuellement opposés d'un châssis de support, qui forment un palier de support pour des pièces de coulissement (18) individuelles des cadres (10, 12).

10. Procédé pour faire fonctionner un dispositif selon l'une des revendications 1 à 9, **caractérisé en ce que**, pendant le fonctionnement en mode de filtration, les moyens de filtration (22) sont insérés en place et les cadres (10, 12) sont appliqués de manière étanche les uns contre les autres au moyen du système d'étanchéité (20), et **en ce que** pour un fonctionnement en mode de nettoyage et/ou de rinçage et/ou de stérilisation, les cadres (10, 12) sont tout d'abord écartés les uns des autres par coulissement, le moyen de filtration respectif est retiré, et les cadres sont à nouveau rapprochés les uns des autres de manière étanche.
